Europäisches Patentamt

European Patent Office

Office européen des brevets

(11) Publication number: **0 004 193**

A1

# EUROPEAN PATENT APPLICATION

(21) Application number: 79300375.7

(22) Date of filing: 12.03.79

(51) Int. Cl.²: **B 23 D 45/20**
B 26 D 1/56, B 29 C 17/14

(30) Priority: 10.03.78 GB 993078

(43) Date of publication of application:
19.09.79 Bulletin 79/19

(84) Designated contracting states:
DE FR GB IT NL

(71) Applicant: IMPERIAL CHEMICAL INDUSTRIES LIMITED
Imperial Chemical House Millbank
London SW1P 3JF(GB)

(72) Inventor: Killen, Dennis
2 London Road Hazel Grove
Stockport Cheshire SK7 4AH(GB)

(74) Representative: Houghton, Malcolm John et al,
Imperial Chemical Industries Limited Legal Department:
Patents Thames House North Millbank
London SW1P 4QG(GB)

(54) Method and machine for cutting sheet material.

(57) A method for quickly cutting rigid polyurethane foam laminate, especially metal faced laminate, while the laminate is continuously transported on a conveyor, consists of moving circular saws, arranged in fixed disposition alternately above and below the laminate, towards and away from the laminate in a line perpendicular to the laminate. The saw blades collectively extend across the width of the laminate. Alternatively the blades are moved with a gyratory motion to increase the effective cutting width of each blade enabling the blade diameter to be reduced.

Saws 11 and 12 are two of three saws extending across the width of laminate 14 supported on a frame 15 mounted in guides 16 on a carriage 17 movable in synchronism with advancing laminate 14. The saw blades 11' and 12' are moved alternately into cutting engagement with the laminate by displacement of frame 15 relatively to carriage 17.

FIGURE 2

The invention concerns cutting and like machines, and has more particular, though not exclusive, reference to a cut-off machine for severing discrete lengths of laminated rigid foam board during the production of continuous lengths thereof.

A conventional method of producing rigid foam boards for insulating and building purposes as a continuous process comprises spraying the appropriate foam-forming chemicals onto a moving web of paper, and, when such chemicals have risen to an appropriate thickness (usually from one half to four inches), applying a top paper to the foam, the resultant laminate then being passed through a curing conveyor of a length determined by the necessary curing time of the foam in relation to the speed of advancement of the conveyor, for compression and curing of the foam. In a typical installation the conveyor will be between twenty and thirty feet long.

The laminate issues from the curing conveyor as a continuous board, a typical board being one inch thick and four feet wide, and comprising a rigid urethane foam of density between one and one half and three pounds per cubic foot having a kraft or bitumen impregnated paper or rigid sheet, which may be metal, at each side thereof.

As the continuous board issues from the conveyor, it is necessary to cut the same into discrete lengths, cut-off machines for severing such discrete lengths being known in the art.

One conventional cut-off machine includes a carriage for clamping to the board for movement therewith in the direction of advance of the conveyor or mounted for movement

0004193

in synchronism with the advance of the conveyor, a circular saw being supported on the carriage and being movable on the carriage transversely of the board to make a cut therein, upon completion of the cut, the carriage is released from the board or is returned to its initial position, so as to be readied for a further cutting operation.

Whilst such cut-off machines are effective in operation, problems arise with higher linear speeds of production of the laminate, particularly when wider laminates are involved, having regard to the time taken to effect the cut and to return the carriage to its initial position to effect the next successive cut, such problems being most acute when it is required to produce short boards of significant width.

The object of the invention is to provide an alternative method and means for cutting discrete lengths of board during the continuous production thereof which allows of effecting of a more rapid cut than is possible with conventional cut-off machines.

According to the present invention, there is proposed a method of severing a length from an advancing continuous sheet material which includes the steps of providing rotary cutting elements at each of the opposed faces of such material and in closely spaced disposition relative thereto, moving the cutting elements at the respective opposed faces successively into cutting engagement with the face of the material whilst moving such elements in the feed direction of the sheet material from a datum position and in synchronism with the advance of such material, disengaging the cutting elements from the material, and returning such elements to the said datum position, the dimensions and disposition of the cutting elements and the respective paths of movement thereof in moving to and from a position of cutting engagement with the material being such as to provide a continuous line of cut through the full transverse extent of the material.

The invention also includes a cut-off machine characterised by spaced first and second rotary cutter elements movable into and out of cutting engagement with respective opposed faces of a sheet material located between the said first and second such elements, the dimensions and relative dispositions of the cutting elements and the respective paths of movement thereof in moving to and from a position of cutting engagement with the material providing a continuous line of cut in such material.

The invention will now be described further, by way of example only, with reference to the accompanying diagrammatic drawings illustrating one embodiment thereof and in which:-

Figure 1    is a front elevation of the individual circular saws of a cut-off machine constructed in accordance with the invention, and shows the relative dispositions of such saws;   and

Figure 2    is a side elevation of the cut-off machine as shown in Figure 1.

Referring now to the drawings, a cut-off machine constructed in accordance with the invention comprises three circular saws 11, 12, 13 arranged one above and two below the laminate 14, the saws being mounted for translational motion towards  and away from the plane of the laminate 14, and perpendicular thereto.   The individual blades 11', 12', 13' of the respective saws 11, 12, 13 lie in a common plane perpendicular to and transversely of the laminate, and the diameters of the respective blades and their relative dispositions are such that collectively the blades extend continuously from edge to edge of the laminate.

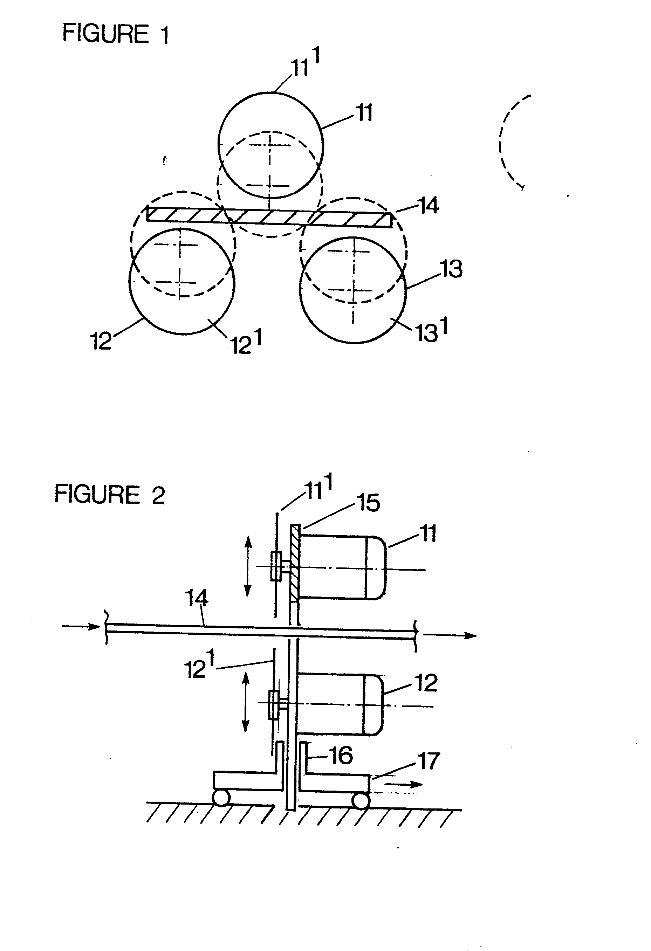

As can best be seen in Figure 1, the peripheries of the respective blades lie in closely spaced disposition relative to the upper or lower surface, as appropriate, of the laminate, and the upper blade 11', is symmetrically disposed in relation to the spaced lower blades 12', 13'. The saws 11, 12, 13 are supported in a common support frame 15 arranged in generally vertical disposition, such frame 15 being mounted in guides 16 on a carriage movable parallel to the direction of laminate feed and in synchronism with such feed, the frame 15 being movable in the said guides in a plane perpendicular to the plane of the laminate and extending transversely thereof.

A suitable displacement means, not shown, is provided to effect adjustment of the frame 15 towards and away from the plane of the laminate, and a drive means, likewise not shown, is provided to move the carriage 17 in synchronism with the advance of laminate, such drive means being adapted to return the carriage to its datum position upon completion of the cutting operation.

In practising the method of the invention, and with the carriage 17 initially at its datum position, the carriage 17 is moved in synchronism with the laminate 14 and the frame 15 is caused to effect a reciprocatory motion in the guides 16 to bring the blades 11', 12', 13' at the opposite sides of the laminate into successive cutting engagement with such laminate.. Upward movement of the frame 15 will bring the lower blades 12', 13' into the position shown in dotted lines in the lower part of Figure 1, whilst a subsequent downward movement will bring the upper blades 11' into the position shown in dotted line in the upper part of Figure 1.

As will be appreciated, the disposition and diameters of the blades as shown, in relation to the width of the laminate, will sever the laminate throughout its full transverse extent subject to a sufficient engagement of the blades with the laminate during the translational motion of such blades.

On completion of the reciprocation of the frame, motion of the carriage in synchronism with the advance of the laminate is interrupted, and the carriage is returned to its initial position.

In an alternative arrangement, not shown, instead of moving the frame linearly upwards and downwards relative to the laminate, which linear motion can be derived from a piston and cylinder arrangement or from a crank and connecting rod operating on a frame supported in a guide formation, such frame can be caused to execute a rotary motion in the plane of the frame such that the axis of each blade moves in a circle of small radius and in so doing brings the peripheries of the respective blades into cutting engagement with the laminate. As will be appreciated, the rotary motion as aforesaid can readily be effected by mounting the frame on the carriage via two cranks, driven, and interconnected, cranks. One advantage of the use of the gyratory motion suggested is that the effective cutting width of each blade is increased, with the possibility of reducing the blade diameter or of providing for the use of a given cut-off machine for cutting a range of widths of laminate.

In the embodiment illustrated the individual saws 11, 12, 13 are independantly driven from respective motors, and although such independent drive is to be preferred, a common drive can be used for the various saws.

The invention is not limited to the use of three saws, or to three saws arranged in the disposition shown, since other numbers and dispositions may be preferred in some instances.

The invention is of particular value for cutting rigid urethane foam laminates and particularly such laminates faced on both sides with metal sheeting.

CLAIMS

1.      A method of severing a length from an advancing continuous sheet material characterised in the steps of providing rotary cutting elements at each of the opposed faces of such material and in closely spaced disposition relative thereto, moving the cutting elements at the respective opposed faces successively into cutting engagement with the face of the material whilst moving such elements in the feed direction of the sheet material from a datum position and in synchronism with the advance of such material, disengaging the cutting elements from the material, and returning such elements to the said datum position, the dimensions and disposition of the cutting elements and the respective paths of movement thereof in moving to and from a position of cutting engagement with the material being such as to provide a continuous line of cut through the full transverse extent of the material.

2.      A method as claimed in claim 1 in which the cutting elements move to and from a position of cutting engagement in a line perpendicular to the feed direction of the sheet material.

3.      A method as claimed in claim 1 in which the cutting elements move to and from a position of cutting engagement in gyratory motion in a plane perpendicular to the plane of sheet material and extending transversely thereof, such that the axis of each cutting element moves in a circle of small radius.

4.      A method as claimed in any one of claims 1 to 3 in which the sheet material is a rigid polyurethane foam laminate.

5.      A method as claimed in claim 4 in which the laminate is faced on both sides with metal sheeting.

6.      A cut-off machine having a carriage which can be mounted for movement in synchronism with the advance of a conveyor transporting sheet material and, on the carriage, a cutting device for cutting the sheet material, characterised in that the cutting device comprises spaced first and second rotary cutting elements, and displacement means for moving the elements into and out of cutting engagement with respective opposed faces of sheet material located between the said first and second such elements, the dimensions and relative dispositions of the cutting elements and the respective paths of movement thereof in moving to and from a position of cutting engagement with the material providing a continuous line of cut in such material.

7.      A machine as claimed in claim 6 in which the cutting elements are supported in a frame on the carriage, the displacement means effecting movement of the cutting elements by movement of the frame relative to the carriage.

8.      A machine as claimed in claim 7 in which the displacement means comprises a plurality of drivable, interconnected cranks for effecting a gyratory movement of the cutting elements.

MJH/BH
8.3.79.

FIGURE 1

11$^1$

11

14

12    12$^1$

13

13$^1$

FIGURE 2

11$^1$    15

11

14

12$^1$

12

16    17

0004193

# EUROPEAN SEARCH REPORT

European Patent Office

Application number

EP 79 30 0375

## DOCUMENTS CONSIDERED TO BE RELEVANT

| Category | Citation of document with indication, where appropriate, of relevant passages | Relevant to claim |
|---|---|---|
| X | <u>BE - A - 852 049</u> (SAINT GOBAIN)<br>* Figures; page 1 - page 3, line 20; page 4, lines 1-5 *<br><br>-- | 1-8 |
| | <u>US - A - 3 400 426</u> (BOGGS)<br>* Figures, abstract *<br><br>-- | 1-8 |
| | <u>DE - A - 2 622 584</u> (MANNESMANN)<br>* Figures; page 7, lines 2-20 *<br><br>-- | 1-8 |
| A | <u>DE - A - 2 246 873</u> (ERNST,RUDOLF)<br>* Figures *<br><br>-- | 1 |
| A | <u>FR - A - 1 270 310</u> (BAEHRE METALL-WERK)<br>* Complete document *<br><br>---- | 1 |

**CLASSIFICATION OF THE APPLICATION (Int. Cl.³)**

B 23 D 45/20
B 26 D 1/56
B 29 C 17/14

**TECHNICAL FIELDS SEARCHED (Int.Cl.³)**

B 23 D
B 26 D
B 29 C

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 28-05-1979 | CORDENIER |

EPO Form 1503.1 06.78